# EUROPÄISCHE PATENTSCHRIFT

(11) **EP 0 850 745 B1**
(45) Veröffentlichungstag und Bekanntmachung des Hinweises auf die Patenterteilung: **22.10.2003**
(21) Anmeldenummer: 96810895.1
(22) Anmeldetag: 23.12.1996
(51) Int. Cl.: B29C 45/58, B01F 5/06, B29B 7/32

(54) **Düse für eine Polymerschmelze**
Nozzle for polymer melts
Buse pour polymères fondus

(43) Veröffentlichungstag der Anmeldung: 01.07.1998
(73) Patentinhaber: Sulzer Chemtech AG, 8404 Winterthur (CH)
(72) Erfinder: Maurer, Rudolf, 8404 Winterthur (CH)
(74) Vertreter: Sulzer Management AG

(56) Entgegenhaltungen:
- EP-A- 0 113 041
- EP-A- 0 361 361
- DE-U- 9 412 749
- US-A- 3 743 250
- US-A- 3 827 676
- US-A- 4 072 296
- US-A- 4 848 920
- DATABASE WPI Section Ch, Week 8652 Derwent Publications Ltd., London, GB; Class J02, AN 86-345589 XP002031592 & SU 1 230 655 A (GIPRONIKEL DES RES) , 15.Mai 1986

## Beschreibung

Die Erfindung betrifft eine Düse für eine Polymerschmelze sowie eine Verwendung der Düse.

Eine derartige Düse lässt sich beispielsweise in einer Spritzeinheit bei einer Spritzgiessmaschine verwenden, die zur Herstellung von Kunststoffteilen dient. Die Düse, nämlich eine Verschlussdüse, umfasst eine Verschlussnadel und einen rohrförmigen Kanal, längs dessen Achse die Nadel bewegbar ist. Durch den Ringkanal zwischen der Kanalwand und der Nadeloberfläche wird eine Polymerschmelze unter hohem Druck von einer Eintrittsstelle zu der Düsenöffnung gepresst. Der Ringkanal muss rund sechs- bis achtmal länger als der Rohrdurchmesser sein, damit Inhomogenitäten des Strömungsprofils an der Eintrittsstelle sich bis zur Austrittsstelle ausgleichen können. Eine Reduktion der Inhomogenitäten ist erforderlich, um eine gewünschte Qualität des Produktes zu erhalten.

Bei vielen Polymeren findet im geschmolzenen Zustand eine irreversible Veränderung, eine thermische Degradation, statt, deren Ausmass von der Dauer abhängt, während der das Polymer geschmolzen ist. Solche Veränderungen führen in den Produkten zu Spuren, die für deren Qualität abträglich sind. Beim Fliessen des Polymers durch den engen Ringkanal der Spritzgiessdüse bilden sich sowohl an der Kanalwand als auch an der Nadeloberfläche Grenzschichten aus, in denen die Verweilzeit des Polymers wesentlich länger ist als im Mittenbereich des Ringkanals. Daher ergibt sich in den Grenzschichten eine verstärkte Degradation, die sich besonders ungünstig auf die Produktequalität auswirkt.

Es ist Aufgabe der Erfindung, für die genannte Düse Mittel zu schaffen, die die nachteiligen Wirkungen der thermischen Degradation in den Randschichten verringern. Diese Aufgabe wird durch die in Anspruch 1 genannten Mitteln gelöst, nämlich durch statische Mischelemente, die geeignet ausgebildet und an geeigneten Stellen angeordnet sind.

Die Patentschriften US 3 743 250 und US 3 827 676 beschreiben statische Mischer, deren mischwirksamen Elemente jeweils längs einem stabartige Körper angeordnet sind, wobei die stabartigen Körper sich auf Längsachsen der Mischer befinden. Die Verschlussnadel der erfindungsgemässen Düse ist ein entsprechender stabartiger Körper.

Die erfindungsgemässe Düse für eine Polymerschmelze umfasst eine Eintritts- sowie eine Austrittsstelle, einen diese Stellen verbindenden rohrförmigen Kanal und einen entlang der Kanalachse angeordneten, stabartigen Körper, der eine Verschlussnadel der Düse bildet. Mindestens ein statisches Mischelement ist im Kanal angeordnet; vorzugsweise sind mindestens zwei statische Mischelemente hintereinander angeordnet. Die Mischelemente weisen Durchbrüche für die Aufnahme des stabartigen Körpers auf. Es besteht eine feste Verbindung zwischen dem Körper und den Mischelementen. Zwischen den Mischelementen und der Kanalwand ist ein minimaler Spalt vorgesehen, der ein Verschieben des Körpers in dem Kanal oder ein Einschieben in den Kanal zulässt.

Die Mischelemente weisen Durchbrüche für die Aufnahme des stabartigen Körpers auf. Mit Durchbrüchen an sich wird die mechanische Stabilität der Mischelemente verringert. Aufgrund der erfindungsgemäss vorgesehenen festen Verbindung zwischen dem stabartigen Körper und den Mischelementen ergibt sich aber im Gegenteil eine Verbesserung der Widerstandsfähigkeit der Mischelemente.

Damit die Mischelemente hinsichtlich der Druckkräfte besonders widerstandsfähig sind, werden diese mit Vorteil gegossen, so dass sie jeweils ein ohne Fügestellen zusammenhängendes Bauteil bilden, d. h. ein Bauteil mit monolithischer Struktur darstellen.

Das Mischelement umfasst mit Vorteil eine Vielzahl von lagenweise angeordneten Stegen, wobei die Stege benachbarter Lagen sich kreuzen. Die Stege schliessen bezüglich der Kanalachse einen Winkel von beispielsweise 45° ein, der auch einen anderen Wert zwischen 10° und 70° haben kann.

Bei den Düsenverschlussnadeln ist eine Zentrierung nötig. Diese muss sehr exakt sein, damit ein dichter Verschluss der Düsenöffnung möglich ist. Bei bekannten Spritzgiessdüsen muss die Nadel relativ dick ausgebildet sein, damit sie durch die auf sie einwirkenden Kräften nicht deformiert wird und somit die Nadel immer exakt zentral ausgerichtet bleibt. Bei der erfindungsgemässen Düse stellen die Mischelemente zusätzlich eine mechanische Stabilisierung und gleichzeitig ein Zentriermittel der Nadel dar. Daher kann die Nadel wesentlich dünner ausgebildet sein als bei den bekannten Düsen. Die Verschlussnadel kann im Bereich der Mischelemente einen Durchmesser aufweisen, der kleiner als ein Drittel des Kanaldurchmessers ist.

Die Länge der Mischstrecke kann bei der erfindungsgemässen Düse wesentlich kürzer als bei den bekannten Düsen sein, nämlich kleiner als rund das Dreifache des Kanaldurchmessers. Damit ist die Menge an Schmelze, die sich im Ringkanal befindet, entsprechend kleiner. Da somit die Verweilzeit kürzer ist, ist auch das Ausmass der thermischen Degradation geringer.

Nachfolgend wird die Erfindung anhand der Zeichnungen erläutert. Es zeigen:
- Fig. 1: einen zentralen Längsschnitt durch zwei bekannte statische Mischelemente, die hintereinander angeordnet sind,
- Fig. 2: einen Längsschnitt durch einen Teil einer erfindungsgemässen Spritzgiessdüse und
- Fig. 3: einen Längsschnitt durch ein strömungsformendes Organ zu einer Flaschenblasoder Rohrextrusionsanlage nicht gemäß der Erfindung (nicht beanspruchter Gegenstand).

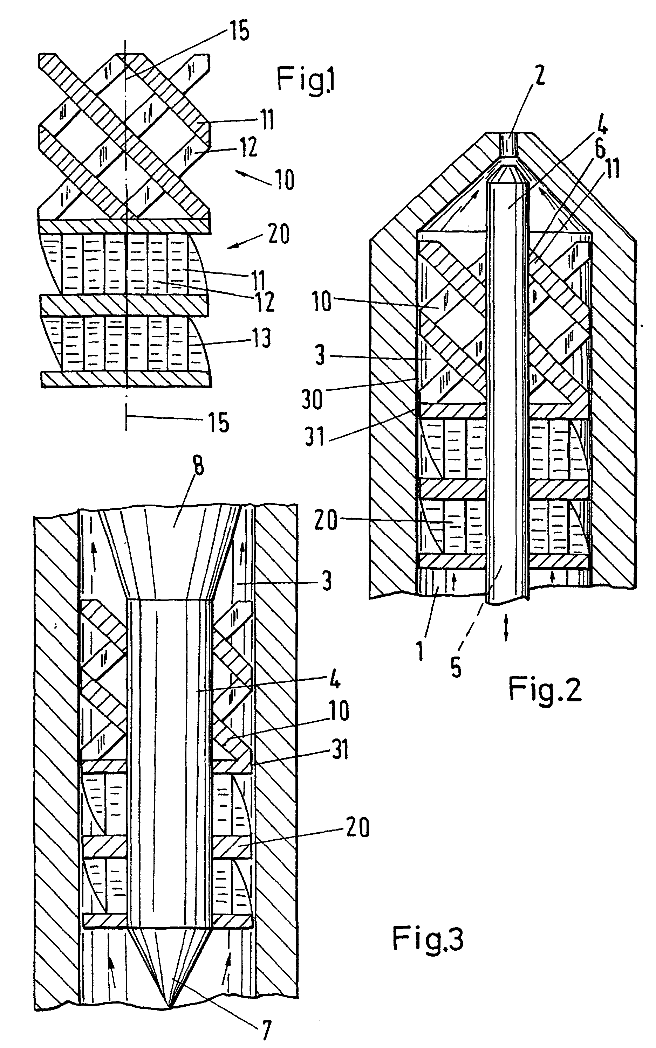

Die in Fig.1 dargestellte Mischelemente 10 und 20 weisen eine Struktur auf, die beipielsweise aus der CH-PS 642 564 bekannt ist. Die beiden Mischelemente sind in Richtung einer Längsachse 15 hintereinander angeordnet. Die Struktur eines Mischelements baut sich aus ineinandergreifenden und sich kreuzenden Stegen 11, 12, 13 auf. Die Stege bilden zwei Gruppen von parallel ausgerichteten Strukturelementen 11 bzw. 12.

Die Mischelemente 10 und 20 sind zwei monolithische Bauteile. Das eine ist gegenüber dem anderen und bezüglich der Achse 15 um 90° gedreht angeordnet. Die beiden Elemente können auch zusammen ein einziges monolithisches Bauteil bilden. Die gezeigten Mischelemente sind für ein Rohr mit kreisförmigem Querschnitt vorgesehen. Deshalb sind die randständigen Stege 13 der Rohrwand entsprechend abgerundet.

Die in Fig.2 gezeigte Spritzgiessdüse enthält die Mischelemente 10, 20 der Fig.1, die nun zusätzlich Durchbrüche 5 für die Aufnahme des stabartigen Körpers 4, d. h. der Verschlussnadel, aufweisen. Es bestehen feste Verbindungen 6 zwischen den Stegen 11, 12 der Mischelemente und der Oberfläche der Nadel 4. Zwischen der Wand 30 des Kanals 3 und den Mischelementen 10, 20 befindet sich ein schmaler Spalt 31, der einerseits die Nadel 4 zentriert und der andererseits genügend Spiel lässt, so dass die Nadel 4 längs des Kanals 3 bewegbar ist. Die Breite des Spalts 31 beträgt rund 0,1 bis 0,3 mm. Mit der Nadel 4 lässt sich die Düsenöffnung oder Austrittstelle 2 dicht verschliessen.

In der Darstellung der Spritzgiessdüse fehlt ein Antrieb für die hin- und herbewegbare Verschlussnadel 4 und eine Zuführstelle für die Polymerschmelze, die beispielsweise seitlich, am antriebseitigen Ende des Kanals 3 angeordnet ist. Die Zuführstelle kann als Eintrittstelle des strömungsformenden Organs angesehen werden; in Fig.2 ist jedoch die offene Querschnittsfläche am unteren Ende des gezeichneten Teils als Eintrittstelle 1 angegeben.

Das in Fig.3 gezeigte strömungsformende Organ, das einer Hohlkörperextrusionsanlage zugeordnet ist, entspricht nicht der Erfindung, hat aber im wesentlichen den gleichen Aufbau wie die Spritzgiessdüse der Fig.2. Der stabartige Körper 4 ist hier die Pinole eines Dorns, der zusätzlich einen spitzen Konus 7 bei der Eintrittstelle 1 und einen stumpfen Konus 8 bei der ringförmigen Austrittstelle 2 umfasst. (An der Spitze des spitzen Konus 7 kann eine nicht dargestellte Zuführung für eine Gaseinspeisung vorgesehen sein.) Im Gegensatz zur Spritzgiessdüse gemäß der Erfindung ist hier der Körper 4 ein stationäres Bauteil. Ein minimaler Spalt 31 erlaubt ein rasches Entnehmen bzw. Einschieben des Dorns, beispielsweise zu Reinigungszwecken.

## Patentansprüche

1. Düse für eine Polymerschmelze, mit einer Eintritts(1) sowie einer Austrittsstelle (2), einem diese Stellen verbindenden rohrförmigen Kanal (3) und einem entlang der Kanalachse angeordneten, Verschlussnadel (4), mit der die Austrittsstelle verschliessbar ist, wobei mindestens ein statisches Mischelement (10) im Kanal angeordnet ist, vorzugsweise mindestens zwei statische Mischelemente (10, 20) hintereinander angeordnet sind, das oder jedes Mischelement Durchbrüche (5) für die Aufnahme der Verschlussnadel aufweist, eine feste Verbindung (6) zwischen der Verschlussnadel (4) und dem Mischelement besteht und zwischen dem Mischelement und der Kanalwand (30) ein minimaler Spalt (31) vorgesehen ist, der ein Verschieben der Verschlussnadel in dem Kanal oder ein Einschieben in den Kanal zulässt, und die Verschlussnadel zusammen mit dem Mischelement (10, 20) längs des Kanals (3) bewegbar ist.

2. Düse nach Anspruch 1, **dadurch gekennzeichnet, dass** die Verschlussnadel (4) im Bereich des Mischelements (10, 20) einen Durchmesser kleiner als einen Drittel des Kanaldurchmessers aufweist.

3. Düse nach Anspruch 1 oder 2, **dadurch gekennzeichnet, dass** das Mischelement (10, 20) monolithisch ausgebildet ist.

4. Düse nach einem der Ansprüche 1 bis 3, **dadurch gekennzeichnet, dass** das Mischelement (10, 20) eine Struktur aufweist, die eine Vielzahl von lagenweise angeordneten Stegen (11, 12, 13) umfasst, wobei die Stege benachbarter Lagen sich kreuzen und die Stege bezüglich der Kanalachse einen Winkel mit einem Wert zwischen 10° und 70° einschliessen.

5. Düse nach einem der Ansprüche 1 bis 4, **dadurch gekennzeichnet, dass** das Mischelement (10, 20) ein Gusskörper ist.

6. Düse nach einem der Ansprüche 1 bis 5, **dadurch gekennzeichnet, dass** die Verbindung (6) zwischen dem Mischelement (10, 20) und dem stabartigen Körper (4) durch Löten hergestellt ist.

7. Düse nach einem der Ansprüche 1 bis 6, **dadurch gekennzeichnet, dass** der Spalt (31) zwischen dem Mischelement (10, 20) und der Kanalwand (30) eine Breite von rund 0,1 bis 0,3 mm aufweist.

8. Düse nach einem der Ansprüche 1 bis 7, **dadurch gekennzeichnet, dass** die Länge der Mischstrecke kleiner als das Dreifache des Kanaldurchmessers ist.

9. Verwendung einer Düse gemäss einem der Ansprüche 1 bis 8 zur Herstellung von Kunststoffteilen mit einer Spritzgiessmaschine, die eine Spritzeinheit mit der genannten Düse umfasst.

## Claims

1. A nozzle for a polymer melt having an inlet point (1) as well as an outlet point (2), a tubular channel (3) connecting these points and a closure needle (4) arranged along the channel axis with which the outlet point can be closed off, wherein at least one static mixing element (10) is arranged in the channel, and preferably two static mixing elements (10, 20) are arranged one after the other; wherein the or each mixing element has apertures (5) for the accommodation of the closure needle; wherein a firm connection (6) exists between the closure needle (4) and the mixing element; and wherein a minimal gap (31) is provided between the mixing element and the channel wall (30) which permits a displacement of the closure needle in the channel or an insertion into the channel and the closure needle is movable with the mixing element (10, 20) along the channel (3).

2. A nozzle in accordance with claim 1 **characterised in that** the closure needle (4) has a diameter smaller than one third of the channel diameter in the region of the mixing element (10, 20).

3. A nozzle in accordance with claim 1 **characterised in that** the mixing element (10, 20) is monolithic.

4. A nozzle in accordance with one of the claims claim 1 to 3 **characterised in that** the mixing element (10, 20) has a structure having a plurality of webs (11, 12, 13) arranged in layers, with the webs of adjacent layers crossing one another and with the webs including an angle with a value of between 10° and 70° with respect to the channel axis.

5. A nozzle in accordance with one of the claims 1 to 4 **characterised in that** the mixing element (10, 20) is a cast body.

6. A nozzle in accordance with one of the claims 1 to 5 **characterised in that** the connection (6) between the mixing element (10, 20) and the rod-like body (4) is produced by soldering or brazing.

7. A nozzle in accordance with one of the claims 1 to 6 **characterised in that** the gap (31) between the mixing element (10, 20) and the channel wall (30) has a width of about 0.1 to 0.3 mm.

8. A nozzle in accordance with one of the claims 1 to 7 **characterised in that** the length of the mixing path is less than three times the channel diameter.

9. Use of a nozzle in accordance with one of the claims 1 to 8 for the manufacture of plastic parts using an injection moulding machine having an injection unit with the said nozzle.

## Revendications

1. Buse pour une fonte de polymères, avec un emplacement d'entrée (1) et un emplacement de sortie (2), un canal tubulaire (3) reliant ces emplacements et un pointeau de fermeture (4) disposé le long de l'axe du canal, au moyen duquel l'emplacement de sortie peut être fermé, où au moins un élément de mélange statique (10) est disposé dans le canal, de préférence au moins deux éléments de mélange statiques (10, 20) sont disposés l'un derrière l'autre, le ou chaque élément de mélange présente des perçages (5) pour la réception du pointeau de fermeture, une liaison fixe (6) existe entre le pointeau de fermeture (4) et l'élément de mélange, et entre l'élément de mélange et la paroi du canal (30) une fente minimale (31) est prévue qui permet un déplacement du pointeau de fermeture dans le canal ou une insertion dans le canal, et le pointeau de fermeture est déplaçable ensemble avec l'élément de mélange (10, 20) le long du canal (3).

2. Buse selon la revendication 1, **caractérisée en ce que** le pointeau de fermeture (4) présente dans la zone de l'élément de mélange (10, 20) un diamètre qui est plus petit qu'un tiers du diamètre du canal.

3. Buse selon la revendication 1 ou 2, **caractérisée en ce que** l'élément de mélange (10, 20) est réalisé d'une manière monolithe.

4. Buse selon l'une des revendications 1 à 3, **caractérisée en ce que** l'élément de mélange (10, 20) présente une structre qui comprend une pluralité de baguettes (11, 12, 13) disposées par couches, où les baguettes de couches avoisinantes se croisent, et les baguettes forment relativement à l'axe du canal un angle d'une valeur entre 10° et 70°.

5. Buse selon l'une des revendications 1 à 4, **caractérisée en ce que** l'élément de mélange (10, 20) est un corps coulé.

6. Buse selon l'une des revendications 1 à 5, **caractérisée en ce que** la liaison (6) entre l'élément de mélange (10, 20) et le corps en forme de tige (4) est réalisée par brasage.

7. Buse selon l'une des revendications 1 à 6, **caractérisée en ce que** la fente (31) entre l'élément de mélange (10, 20) et la paroi du canal (30) a une largeur d'environ 0,1 à 0,3 mm.

8. Buse selon l'une des revendications 1 à 7, **caractérisée en ce que** la longueur du trajet de mélange est plus petite que le triple du diamètre du canal.

9. Utilisation d'une buse selon l'une des revendications 1 à 8, pour la fabrication de pièces en matière synthétique avec une presse d'injection, qui comprend une unité d'injection avec la buse indiquée.
